(19) Europäisches Patentamt
European Patent Office
Office européen des brevets

(11) **EP 3 571 386 B1**

(12) **EUROPEAN PATENT SPECIFICATION**

(45) Date of publication and mention
of the grant of the patent:
**10.03.2021 Bulletin 2021/10**

(51) Int Cl.:
**F02M 21/02** (2006.01)     **F16L 39/00** (2006.01)
**F02M 69/46** (2006.01)     **F02D 19/02** (2006.01)

(21) Application number: **18700619.2**

(22) Date of filing: **23.01.2018**

(86) International application number:
**PCT/EP2018/051581**

(87) International publication number:
**WO 2018/134437 (26.07.2018 Gazette 2018/30)**

(54) **A PROCESS UNIT FOR HAZARDOUS MATERIAL**

PROZESSEINHEIT FÜR GEFÄHRLICHE MATERIALIEN

UNITÉ DE TRAITEMENT POUR MATIÈRE DANGEREUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2017 EP 17152696
02.03.2017 EP 17158935**

(43) Date of publication of application:
**27.11.2019 Bulletin 2019/48**

(73) Proprietor: **Eltronic Fueltech A/S
8722 Hedensted (DK)**

(72) Inventors:
• **ØSTERLUND, Jeppe, Kiilerich
7000 Fredericia (DK)**
• **NIELSEN, Ryan
8700 Horsens (DK)**
• **LUND, Kristoffer
8700 Horsens (DK)**
• **HANSEN, Mathias, Parmo
0484 Oslo (NO)**

(74) Representative: **Inspicos P/S
Kogle Allé 2
2970 Hørsholm (DK)**

(56) References cited:
**EP-A1- 2 589 788      WO-A1-2017/162333
US-A1- 2015 316 190**

## Description

Technical field

The present invention relates to the field of handling hazardous material. More particularly, the invention is concerned with a process unit for hazardous material. The process unit comprises an inner wall extending between a proximal inner flange and a distal inner flange and defining an inner passage for transport of the hazardous material, and a process control structure configured for interaction with the hazardous material in the inner passage.

Background

Various systems exist for handling and control of hazardous material. By way of example, various gas fuel systems for combustion systems are known in the art. In general, a gas fuel system includes a fuel gas storage and a combustion engine, e.g. serving as a main engine in a cargo vessel. The role of the fuel gas supply system is to provide a flow of fuel gas from the fuel gas storage to the combustion engine. Fuel gas systems, e. g. in marine vessels, often comprise a pump and an evaporation system, sometimes referred to as an FGSS system. Further, a safety system, sometimes referred to as a GVU, is inserted between the FGSS and the engine. The GVU is configured to shut off gas supply and may contain a structure facilitating purging the gas system e. g. with an inert gas, and a control structure for controlling the supply of fuel gas. The GVU may further contain structures for sensing gas conditions, such as temperature or pressure, for sensing other properties of the gas, and/or for gas filtration.

The fuel gas is suitable for fuelling the combustion engine and is highly flammable. For this reason, leakage prevention is important. As a further precaution, an outer casing may be introduced to increase the safety level of the system by providing a means for leak detection and/or containment and/or ventilation by evacuation of leaks to a safe location.

In processing of hazardous material, different control structures are typically applied. Examples of such structures include valves, pumps, pressure sensors, temperature sensors, mass flow sensors, filters and other structures included for controlling the process. Often such control structures are in direct communication with the hazardous material, and a particular need for leakage detection near process control structures therefore exists.

Because of this increased need for leakage detection, fuel gas supply systems sometimes provide ventilated volumes in areas surrounding valve structures. In known systems, the ventilated volume encompasses the entire valve structure including valve connector, valve actuator, and other peripheral equipment. However, ventilation may be costly and it may take relatively long time to detect any leaked fuel gas in such a relatively large ventilated volume. Furthermore, it takes up space and complicates access to the control structure.

US2015316190 discloses a manifold for a dual-walled pipe with an inner pipe surrounded by an outer pipe to define a primary passage and a secondary passage. The manifold includes a leakage conduit connecting an intermediate chamber of socket and a second end adapted to fluidly communicate with the secondary passage.

WO2017162333 discloses a measuring device for measuring a physical property of a fluid. The device comprises a main body that is closed along a peripheral line and which surrounds a first aperture that passes through the main body in an axial direction. The main body has at least one second aperture that passes through the main body in the axial direction; and at least one sensor device, which can be brought into operative connection with the first aperture, is assigned to the main body.

EP2589788 discloses a cylinder head with an inlet valve casing configured to define a leakage detection space between an inner surface thereof and the fuel inlet valve.

Summary of the invention

On the above background, it is an object of embodiments of the invention inter alia to improve leakage detection, to provide a process unit that saves space, and to provide a more convenient access to the control structure. It may be a further object to increase safety, and reduce the lead time between a point in time where a leakage occurs and a point in time where the leakage is detected.

In a first aspect, the invention provides a process unit according to claim 1.

Since the outer wall extends about the inner wall, hazardous material, which may accidentally leak from the inner passage, will have to pass the outer passage before it pollutes the ambient space. The outer passage therefore forms a way of detecting the leaking hazardous material and optionally a way of transporting the hazardous material away by ventilation.

Should a leakage occur, then the leaking hazardous material can be detected efficiently by monitoring changes in the outer passage, e.g. by detecting constituents of the hazardous material in the outer passage or by detecting a pressure change in the outer passage. The risk of hazardous material near the process unit may therefore be reduced.

By definition, the term "centre axis" herein refers to an axis through geometric centre-points of cross-sections through the inner passage. If the inner passage has a circular cross-section, the centre axis is in an axis connecting centres of the circles. By definition, the term "radial direction" herein refers to a direction perpendicularly away from the centre axis. Herein, the term radial direction does not require the cross-section of the inner passage to be circular.

The hazardous material may particularly be a fluid material, e.g. a material that could be pumped through the inner passage. The fluid material could be gas or liquid substance. It could be a material which is flammable, toxic, or otherwise undesired in the ambient space, e.g. because of a particularly polluting effect, because it is unhealthy for living beings, or because it is explosive etc.

The inner wall may particularly be tubular which facilitate transport of fluid material. It could be made of stainless steel, aluminium, or various compositions of materials depending on the hazardous material in question.

If several double walled units are to be assembled in extension of each other, the outer and inner passages are to be matched to the passages of the neighbouring unit, such that the inner wall remains enveloped by the outer wall.

The higher the degree of envelopment, the lower the risk is of inner wall content moving from the inner passage to the ambient space, without passing through the outer passage. The proximal inner flange and the distal inner flange may particularly be a structure by which the unit is attachable to a pipe system or to another unit of the same kind. In one example, two units are joined. One of the two units could define a valve structure and the other of the two units could define a sensor structure or a purge structure .

The flanges may include sealing means for preventing leakage between the flange and an adjacent, connecting, flange, and the flange may include fastening means, e.g. in the form of holes, e.g. threaded holes, for receiving bolts etc.

Within the inner proximal flange, the process unit forms an inner proximal opening into the inner passage.

Within the inner distal flange, the process unit forms an inner distal opening into the inner passage.

Within the outer proximal flange, the process unit forms an outer proximal opening into the outer passage.

Within the outer distal flange, the process unit forms an outer distal opening into the outer passage.

The process control structure can interact with the hazardous material in the inner passage. Particularly, it may be in direct contact with the hazardous material transported in the inner passage, and particularly it may be manipulated by, or communicate with, a structure which is in an ambient space outside the inner and outer passages.

The outer wall may particularly be tubular which facilitate transport of fluid material. Tubular herein means that it has an arbitrary shape in a cross-section perpendicular to the flow direction in the outer passage, e.g. circular or oval shape. The inner surface of the outer wall may e.g. extend with an unchanged cross-section from the proximal to the distal flanges.

Alternatively, a cross-section of the inner surface of the outer wall changes shape, or the inner passage splits up in two separate passages exiting the process unit in two different outer flanges.

The outer wall could be made of the same material as the inner wall, i.e. e.g. stainless steel, aluminium, or various compositions of materials depending on the hazardous material in question. The outer wall could, alternatively, be made from one or more materials being different from the material(s) of the inner wall.

The proximal outer flange and the distal outer flange may particularly be a structure by which the unit is attachable to a pipe system or to another unit of an equivalent design. The flanges may include sealing means for preventing leakage between the flange and an adjacent, connecting, flange, and the flange may include fastening means, e.g. in the form of holes, e.g. threaded holes, for receiving bolts etc. The outer flanges may be arranged concentrically about the inner flanges e.g. such that an even spacing between the outer and inner flanges is defined along the circumference of the flanges.

The outer passage may particularly be for:

    a) keeping a static pressure, e.g. a static pressure of an inert gas or an inflammable liquid, or

    b) transport of ventilation air such that leaking gas can be carried away by transport through the outer passage,

According to a), the leakage can be detected by detecting a change in the pressure condition of the outer passage. For that purpose, the outer passage may particularly carry a pressure which is different from the pressure in the inner passage, i.e. a higher or a lower pressure.

According to b), the leakage can be detected by sensors, which can sense a content of the hazardous material in the outer passage or in air ventilated out of the outer passage.

The inner wall may form an inner surface and an opposite outer surface. The inner surface may form a surface in the inner passage and the outer surface may form a surface in the outer passage.

The outer wall may form an inner surface and an opposite outer surface. The inner surface may form a surface in the outer passage and the outer surface may face away from the inner and outer passages. The outer surface may e.g. form an external surface of the process unit and face an ambient space.

The inner wall may have an even wall thickness whereby the inner surface and outer surface of the inner wall becomes parallel surfaces. Alternatively, the inner wall has an uneven wall thickness. In one embodiment, the cross section of the inner passage remains unchanged and the wall thickness of the inner wall is constant. In another embodiment, both the cross section of the inner passage changes and the wall thickness of the inner wall changes.

The outer wall may have an even wall thickness whereby the inner surface and outer surface of the outer wall becomes parallel surfaces. Alternatively, the outer wall has an uneven wall thickness. In one embodiment, the cross section of the outer passage remains unchanged and the wall thickness of the outer wall is constant. In another embodiment, both the cross section of the outer passage changes and the wall thickness of the outer wall changes.

Both the inner and outer surface of the inner wall may extend circumferentially about the inner passage, whereas the inner and outer surfaces of the outer wall may extend circumferentially about the outer passage.

Relative positioning between inner and outer wall may be important to ensure correct and constant flow conditions in both the inner and outer passage. The inner wall could be supported through the outer wall or through the flanges. A way of fixing the relative position of the two pipes is to implement connector elements between them. The connector elements may be held in place e.g. through welding, friction etc.

In one embodiment, the disclosure provides a unit where the inner wall is held by the outer wall through connector elements, e.g. in the form of rigid connectors. By the term rigid connectors, is herein defined that the connectors maintains a fixed position of the inner wall relative to the outer wall, i.e. the connectors do not allow spongy, elastic, movement between the inner and outer walls.

Rigid connectors extending between the inner surface of the outer wall and the outer surface of the inner wall may join the inner wall and the outer wall. The rigid connectors may prevent movement of the inner wall relative to the outer wall.

The rigid connectors may be separate elements arranged between the walls, or the walls and connectors may be made in one piece.

By "made in one piece" is throughout this document considered that the parts can not be non-destructively disassembled. Examples include that they are casted in one piece, that they are welded or glued together, that they are made in an additive manufacturing process e.g. by 3D printing, or that they are cut or milled out of a single block of a material.

Alternatively, the walls and connectors are made in several pieces which are assembled by screws, rivets, or otherwise joined, e.g. by friction.

Since the rigid connectors extend between the inner wall and the outer wall, they occupy a space in the outer passage, herein we refer to this space as "occupied space". The remaining space is available for flow in the outer passage and, herein, it is referred to as "free space".

The free space provides means for ventilation of the outer passage, and it may constitute, by volume, at least 25 percent of the blocked space. This will enable ventilation with relatively small dimensions of the outer passage and thus enable a more compact design of the process unit.

The inner wall and the outer wall may extend concentrically about the centre axis in the inner passage. By concentrically, is herein meant that the inner and outer walls, in cross-sections perpendicular to the centre axis, have the same geometric centre.

To enable communication between ambient space and the inner passage, the inner wall may form an inner opening through the inner wall. The inner opening may allow fluid communication between the inner passage and the outer passage. The outer wall may also form an opening, herein referred to as an outer opening, through the outer wall. The outer opening may allow fluid communication between the outer passage and an ambient space outside the outer wall.

The inner passage may extend along a centre axis between a proximal inner opening and a distal inner opening, the proximal inner opening being within the proximal inner flange and the distal inner opening being within the distal inner flange. The inner opening and outer opening could be offset in a radial direction away from the centre axis in the inner passage. By such radial displacement of the openings, it may be enabled to form a chamber between the two openings. Such a chamber may be used for detection of undesired material leaking through the inner opening.

The inner opening and the outer opening may particularly be concentrically aligned about an axis perpendicular to the centre axis. Concentric alignment will allow insertion of rigid oblong elements through both openings, e.g. insertion of the claimed control structure, e.g. a coupling for a valve, a pressure sensor or other structures which is to communicate with the hazardous material.

At least one of the inner opening and outer opening are prepared for sealing engagement with an inserted control structure to thereby seal and prevent the fluid communication through the inner and outer openings. For this purpose, at least one of the inner opening and outer opening which are prepared for sealing engagement with an inserted control structure, comprises an resilient gasket incorporated in the corresponding wall. The gasket could be an O-ring etc. An O-ring could be incorporated by forming a recess in the edge of at least one of the inner and outer openings such that the O-ring can be seated in the recess.

The unit may further comprise a control passage extending between the inner wall and the outer wall e.g. connecting the inner opening and the outer opening . This control passage may house a control structure or at least parts of a control structure, and the control passage may enable the control structure to interact with the hazardous material of the inner passage whilst being accessible from the outside.

The control passage may e.g. have a circular cross-section.

The outer passage forms a single unified space about the inner passage. This may increase the chance that a hazardous material leaking from the inner passage enters into the outer passage where it can be detected and removed safely.

The outer passage may have a non-circular cross-section - particularly, the cross section of the outer passage may change from a circular cross-section to a non-circular cross section at the above mentioned inner and outer openings and/or the control passage.

The proximal inner flange and the proximal outer flange could be formed in one piece, c.f. the previous definition specifying that the inner and outer flanges can not be non-destructively disassembled. Examples include that they are casted in one piece, that they are welded or glued together, that they are made in an additive manufacturing process e.g. by 3D printing, or that they are cut or milled out of a single block of a material.

The distal inner flange and the distal outer flange could also be formed in one piece forming a distal connector face.

The outer passage may extend between a plurality of outer passage openings in the proximal connector face and a plurality of outer passage openings in the distal connector face. The openings may particularly be shaped such that the dimension of at least one, and preferably all, of the openings is smaller in a radial direction than in other directions. By "radial direction" is herein meant a direction which is perpendicular to the centre axis.

The plurality of openings in at least one of the distal connector face and proximal connector face could be arranged symmetrically about a centre axis. Alternatively, a plurality of openings in at least one of the distal connector face and proximal connector face are arranged non-symmetrically relative to the centre axis.

In one embodiment, at least one of the distal connector face and the proximal connector face is formed in one piece with the inner wall and outer wall. In this embodiment, the inner wall and the outer wall may extend completely separate from each other between the distal and proximal connector faces, and the position of the inner wall relative to the outer wall could be fixed by the connection of both walls to the same connector faces. In this embodiment, the rigid connectors could be avoided.

In one embodiment, the inner wall and outer wall could be made in one piece.

In one embodiment, the inner wall and the outer wall are joined by rigid connectors, and the rigid connectors are made in one piece with the inner and outer wall.

In one embodiment, the inner wall, the outer wall, the connectors, the distal inner flange, the distal outer flange, the proximal inner flange, and the proximal outer flange are made in one piece.

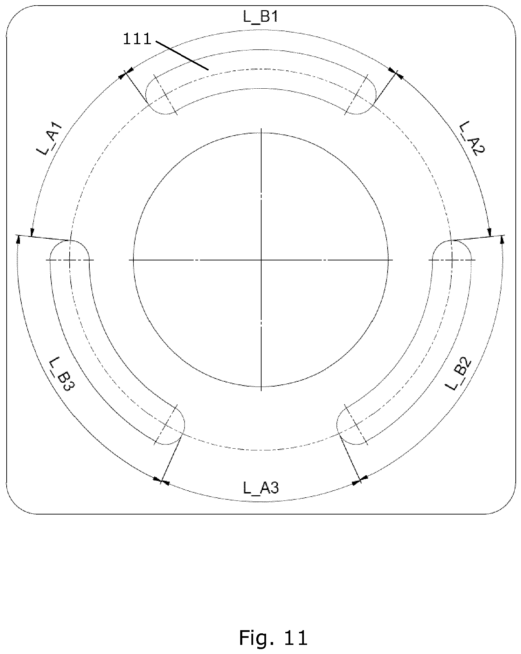

A closed-line geometry may be defined in a cross-section perpendicular to a flow direction between the distal inner flange and the proximal inner flange. By definition, the closed-line geometry extends in the outer passage circumferentially about the inner wall. The definition of this closed-line is further specified relative to fig. 11. To provide efficient ventilation, the closed-line may extend in the free space a distance being at least 25 percent of the distance in which the closed-line extends through the solid matter. With this amount of free space in the outer passage it is less likely that material failure will lead to a leakage of hazardous material in a way that may bypass the outer passage. The solid matter may e.g. be constituted by the above-mentioned rigid connectors.

The process unit may comprise a pressure-equalising structure comprising at least one conduit extending between a first opening in the control passage and a second opening in the outer passage to thereby establish fluid communication between the control passage and the outer passage and thereby equalise pressure in the control passage and outer passage. Due to the pressure-equalising structure, the control passage comes in fluid communication with the outer passage, and hazardous material which could have leaked into the ambient space through the control passage may be detected in, and optionally removed through, the outer passage.

In one embodiment, the pressure-equalising structure forms at least two conduits each extending between a first opening in the control passage and a second opening in the outer passage to thereby establish simultaneous fluid communication between the control passage and the outer passage in each of the at least two conduits. This enables ventilation of the control passage during ventilation of the outer passage.

The process unit may comprise an inner sealing structure arranged in the control passage and preventing flow between the inner passage and outer passage through the control passage and the pressure-equalising structure. The inner sealing structure may include a resilient gasket, e.g. of a rubber material, arranged between an inner wall of the control passage and the process control structure.

The process unit may comprise an outer sealing structure arranged in the control passage and preventing flow between the control passage and an ambient space outside the outer passage. The outer sealing structure may include a resilient gasket arranged between an inner wall of the control passage and the process control structure.

The inner sealing structure and the outer sealing structure may define a sealed chamber within the control passage, and at least one first opening of the aforementioned pressure-equalising structure may be within the chamber to thereby establish fluid communication between the chamber and the outer passage.

The process control structure may interact with the hazardous material and it may be in direct contact with the hazardous material in the inner passage. Further, the process control structure may be accessible or at least partly accessible through the control passage for service, for inspection, for replacement, for powering, or for data communication via cables or tubes etc. The control structure may e.g. be an element selected from the group consisting of: valves, sensors, filters, pumps, service instruments, and combinations thereof. These elements facilitate a control action and they are typically to be serviced periodically, or they are to exchange data, or to be powered.

Particularly, the control structure may be constituted by a valve element being movable in the inner passage to thereby control a flow through the inner passage, a valve actuator arranged in an ambient space outside the inner and outer passages to move the valve element; and a coupling between the actuator and the valve element, the coupling extending in the control passage.

In the embodiment where the control structure is a valve element, the inner and outer sealing structures may be arranged about the coupling to seal the actuator from the inner passage and to define a chamber through which the coupling extends.

The valve element may particularly be rotatable in the inner passage by rotation of the coupling to thereby control the flow through the inner passage. In this situation, the inner and outer sealing structures maintain a sealed chamber and thus prevent fluid communication between the inner and outer passage and between the chamber and the ambient space outside the inner and outer passages. Should a leakage occur, the hazardous material arrives firstly in the outer passage before arriving in the ambient space. I.e. both the inner and the outer sealing structures must be leaking before the hazardous material is released into the ambient space, and if the inner sealing structure is leaking, the hazardous material, which is released from the inner passage, can be detected in, and optionally be carried away by ventilation in, the outer passage.

The proximal outer flange may extend about the proximal inner flange, and the distal outer flange may extend about the distal inner flange. In one embodiment, the flanges are circular and arranged so that they, in pairs, are concentric, i.e. the proximal flanges share the same centre point, and the distal flanges share the same centre point.

The proximal outer flange may be in plane with the proximal inner flange, and the distal inner flange may be in plane with the distal inner flange. In that way, both the inner and the outer passages can be connected to a pipe structure, e.g. to a double pipe with an inner and an outer pipe, and contact with both pipes can be along one common plane.

The process unit may be connected to a process system such that a flow of the hazardous material is provided at a material pressure in the inner passage and such that a flow of the ventilation air at a ventilation pressure is provided in the outer passage. The ventilation pressure may be lower than the material pressure. The ventilation pressure may lower than an ambient pressure outside the outer wall. By this pressure combination, the risk of spreading of the hazardous material to the ambient space is further reduced by the ventilation.

In an alternative embodiment, the pressure in the outer passage may be equal to the material pressure such that the hazardous material will be less disposed to flow from the inner passage towards the outer passage. In this embodiment, it may be preferred to provide the ventilation pressure by use of an inert gas or inflammable liquid etc.

In another alternative embodiment, the pressure in the outer passage may be different from the material pressure, i.e. higher than or lower than the material pressure such that a leakage through the inner wall, through the inner seals, through the outer wall, or through the outer seals will cause a pressure change in the outer passage. This pressure change can be detected by a pressure sensor. In this embodiment, the pressure in the outer passage may be provided by use of an inert gas or inflammable liquid etc.

It may be an advantage to provide a flow of the ventilation air in the control passage, and particularly in that part of the control passage which is constituted by the aforementioned chamber between the inner and the outer sealing structures. This can be facilitated by a pressure-equalising structure forming at least two conduits. In this case, the risk of spreading of the hazardous material through the control passage is further reduced by ventilation of the material out of the control passage.

In an alternative embodiment, a flow of the hazardous material is provided at a material pressure in the inner passage and a static pressure without flow of a detection fluid is provided in the outer passage. The detection gas may e.g. be an inert gas, an inflammable fluid or at least a non-hazardous material. The static pressure may particularly be higher than the material pressure, and the static pressure may be provided in the control passage or at least in the chamber part of the control passage between the inner and outer sealing structures via the conduits of the pressure-equalising structure.

The process unit may particularly be used for controlling the flow of fuel gas in a fuel system for a combustion system, e.g. for the main engine, in a vehicle or a marine vessel. It may form part of a system comprising one or more units of similar kind, e.g. one or more units forming a valve structure, one or more units forming a pump, or one or more units forming a filter etc.

In a second aspect, the disclosure provides a method of transporting hazardous material according to claim 14 or 15.

Brief description of the drawings

Embodiments of the invention will be described in further details with reference to the accompanying drawings in which:

Fig. 1 illustrates a perspective view of the process unit;

Fig. 2 illustrates the process unit in a cross-sectional view;

Figs. 3-4 illustrate the process unit without a control structure;

Figs. 5-6 illustrate details of a process unit with a sealing gasket incorporated in the outer and inner walls;

Fig. 7 illustrates a cross-sectional view through a centre of the inner and outer passages;

Figs. 8 and 9 illustrate a cross-sectional view with further details;

Fig. 10 illustrates a front face of the process unit;

Fig. 11 illustrates a closed-line geometry;

Figs. 12-13 illustrate schematically examples of a process unit for controlling a flow or sensing properties of a hazardous material;

Fig.14 illustrates schematically the process unit installed for controlling flow of fuel gas in a combustion system for a vessel;

Figs. 15-25 disclose schematically different implementations of the process unit; and

Fig. 26 illustrates a perspective view of the inner wall.

Detailed description of the drawings

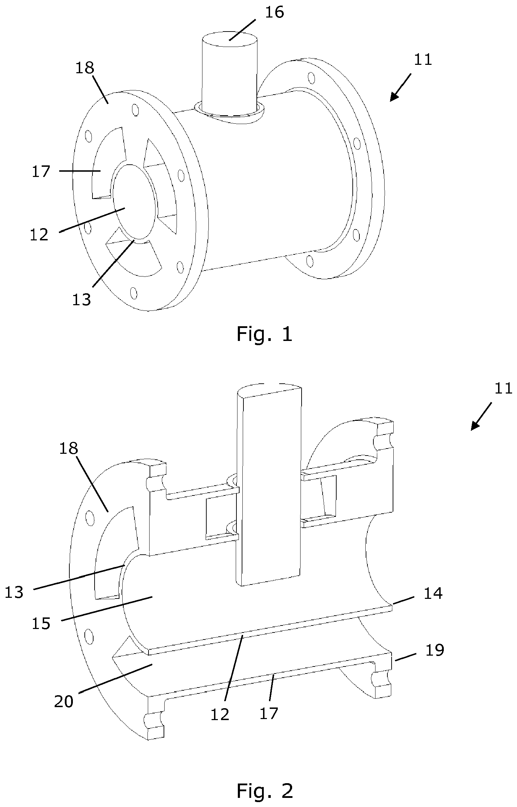

Figs. 1 and 2 illustrate an embodiment of a process unit 11. In Fig. 1, the process unit is disclosed in a perspective view and in Fig. 2, the process unit is illustrated in a cross sectional perspective view.

The process unit comprises an inner wall 12 extending between a proximal inner flange 13 and a distal inner flange 14. The inner wall 12 defines an inner passage 15 in which a hazardous material can be transported.

A process control structure 16 is configured for interaction with the hazardous material in the inner passage. The process control structure could be a valve, a filter, a sensor, or a similar structure that operates in the inner passage.

An outer wall 17 extends about the inner wall 12 and extends between a proximal outer flange 18 and a distal outer flange 19. The outer wall forms an outer passage 20 extending between the inner wall and the outer wall and between the proximal and distal outer flanges.

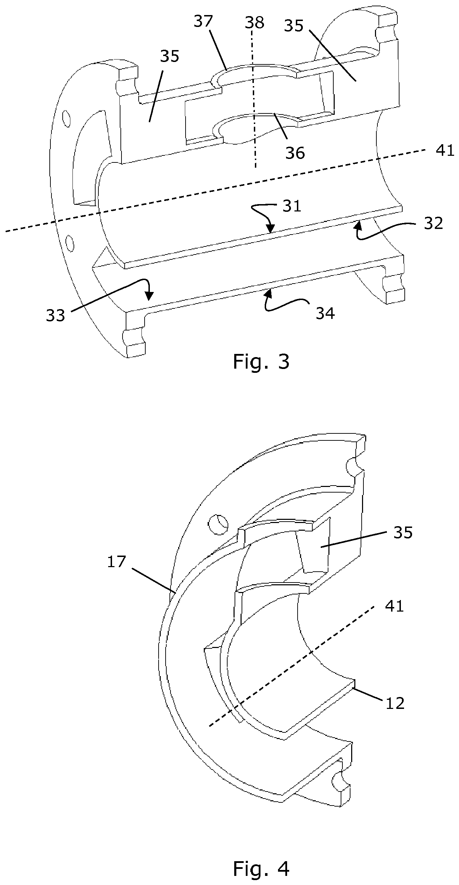

Figs. 3 and 4 illustrate the embodiment of Figs. 1 and 2 without the process control structure. In this view, it is more clearly seen that the inner wall 12 forms an inner surface 31 and an opposite outer surface 32. The inner surface faces inwardly and forms a surface in the inner passage. The outer surface 32 faces outwardly and forms a surface in the outer passage.

The outer wall 17 forms an inner surface 33 forming a surface in the outer passage and an opposite outer surface 34 facing away from the inner and outer passages. In this embodiment, the outer surface 34 of the outer wall 17 forms an outer surface of the unit and the outer surface 32 of the inner wall faces the inner surface 33 of the outer wall. The outer surface of the inner wall extends circumferentially about the inner passage, and the inner surface of the outer wall extends circumferentially about the outer passage.

The inner wall 12 and the outer wall 17 are joined by rigid connectors 35 extending between the inner surface of the outer wall and the outer surface of the inner wall. The connectors are formed in one piece with the inner wall and outer wall in a casting process. The rigid connectors prevent movement of the inner wall relative to the outer wall and thereby ensure a static flow condition in the inner passage an outer passage.

The rigid connectors occupy space in the outer passage and therefore reduce the volume of the outer passage the outer passage. In this disclosure, this is referred to as a blocked space in the outer passage. The remaining, free, space is available for transport of ventilation air. A large free space increases the chances that a leakage from the inner passage ends in the outer passage.

Fig. 4 illustrates that the inner wall 12 and the outer wall 17 extends concentrically about a centre axis 41 in the inner passage.

Figs. 3 and 4 also clearly illustrate that the inner wall forms an inner opening 36 through the inner wall. The inner opening allows fluid communication between the inner passage and the outer passage and the outer wall forms an outer opening 37 through the outer wall. The outer opening allows fluid communication between the outer passage and an ambient space. The inner opening and the outer opening are aligned concentrically about the centre axis 38 offset in the direction of the centre axis, i.e. they are at different distance from the centre axis 41. The inner and outer openings could be made such that sealing engagement between the opening surfaces and an inserted control structure may be secured.

In the embodiment of Figs. 1-4, the outer passage forms one single unified space between the proximal and distal ends of the outer wall.

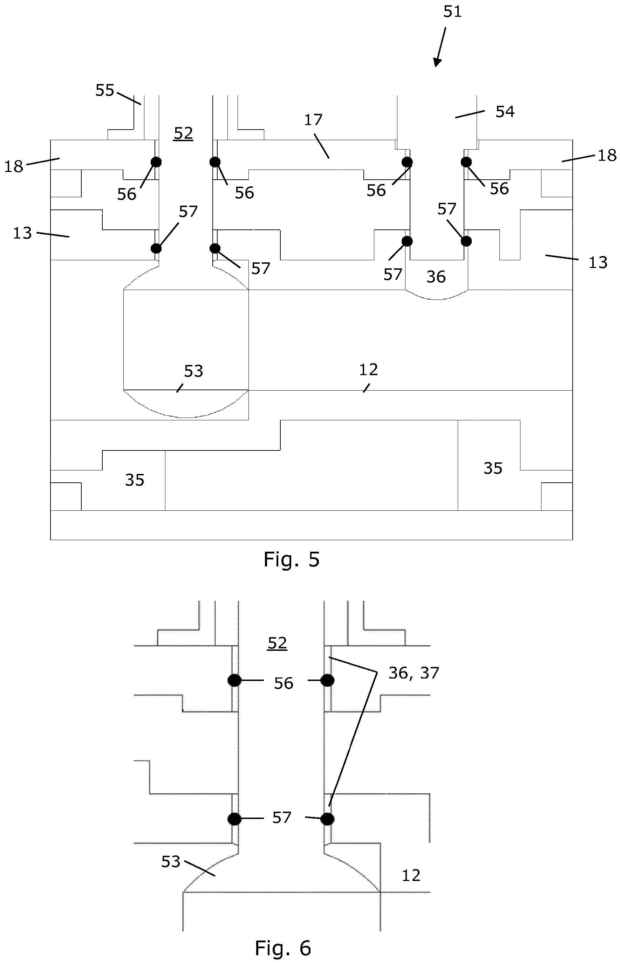

Fig. 5 illustrates a process unit 51 configured as a valve unit. The valve unit comprises a coupling 52 extending through the outer opening and through the inner opening. The coupling 52 operates on a valve element 53 located in the inner passage. Fig. 5 further illustrates a pressure transmitter 54 inserted through additional outer and inner openings.

The coupling 52 is shielded by a cover 55 above outer opening. The cover supports an actuator for driving the coupling.

Figs. 5-6 illustrate details of a process unit with a sealing gasket incorporated in the outer and inner walls to seal between the inner and outer opening and the control structure. The outer wall 17 holds an O-ring 56which seals between the outer opening in the outer wall and the coupling 52 or similar control structure and thereby preventing the fluid communication provided by the outer opening.

The inner wall 12 holds an O-ring 57which seals between the inner opening in the inner wall and the coupling 52 or similar control structure and thereby preventing the fluid communication provided by the inner opening 53.

Fig. 6 illustrates an enlarged view of the O-rings 56, 57 in the inner opening 36 and in the outer opening 37.

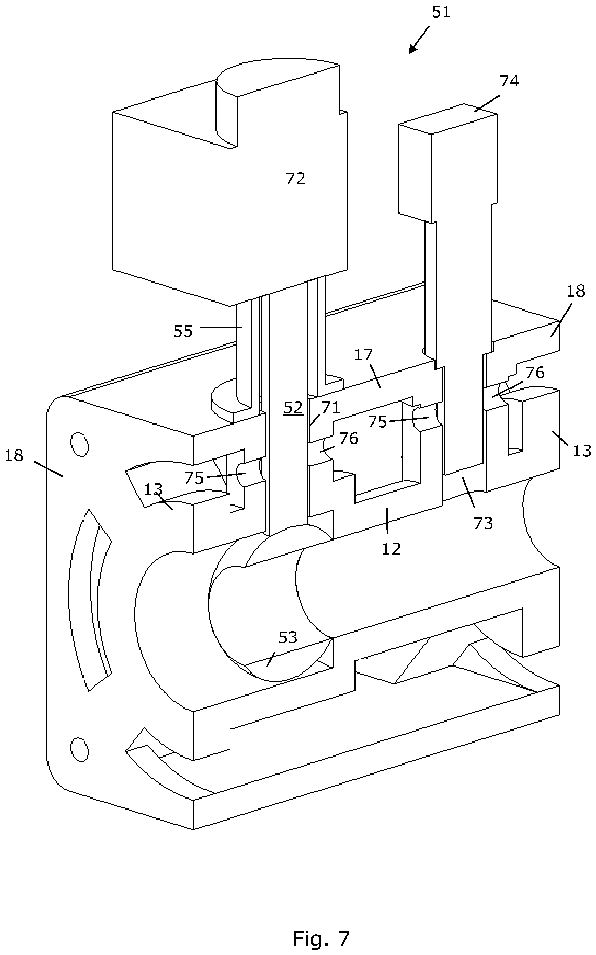

Fig. 7 illustrates an embodiment of the process unit comprising a control passage 71. Rotation of the valve element is affected by the actuator 72 via the coupling extending through the control passage 71. The control passage forms a tubular shape and joins the outer opening and the inner opening.

The process unit comprises an additional control passage 73 providing space for the pressure sensor 74.

The control passages both form an inner opening into the inner passage and an outer opening through the outer wall into an ambient space outside the outer wall. The control passage 71 thus forms an opening into the ambient space inside the cover 55 which forms an extension tube extending the control passage. The control passage 73 forms an tubular passage into the inner passage , and the pressure sensor 74 is inserted therein.

A pressure-equalising structure provides fluid communication between the control passage and the outer passage and thereby detection of leakage of the hazardous material into the control passage and enables venting of the hazardous material through the outer passage. The pressure-equalising structure, in the disclosed embodiment, comprises two conduits 75, 76 extending between a first opening in the control passage and a second opening in the outer passage.

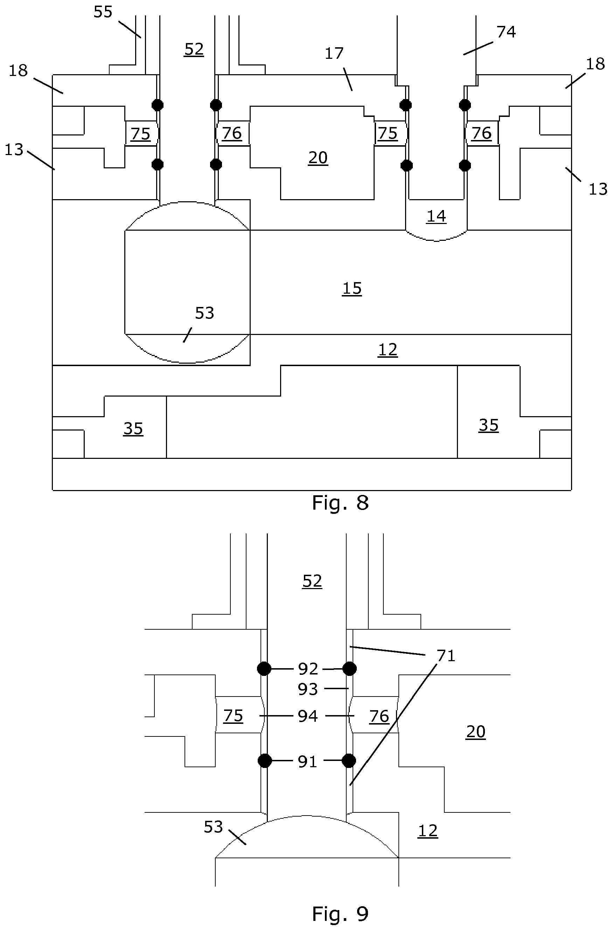

Figs. 8 and 9 illustrate the process unit of Fig. 7 in a side view. Fig. 9 is an enlarged view of the details of the control passage in Fig. 3.

The enlarged view of Fig. 9, illustrates that the process unit comprises an inner sealing structure 91 arranged in the control passage and preventing flow between the inner passage 15 and outer passage 20 through the control passage 71, 73. The process unit further comprises an outer sealing structure 92 arranged above the inner sealing structure in the control passage and preventing flow between the control passage and an ambient space outside the outer passage. The inner sealing structure and the outer sealing structure define a sealed chamber 93 within the control passage, and the first openings 94 of the two conduits 75, 76 are in the chamber. The two conduits 75, 76 are thereby capable of flushing the chamber when there is a flow of ventilation air in the outer passage. If the process unit had been made with only one of the two conduits 75, 76, no flushing would occur. In this situation, the pressure in the outer passage would become a static pressure in the chamber 93, and a flow would only occur in response to leakage of the hazardous material from the inner passage into the chamber.

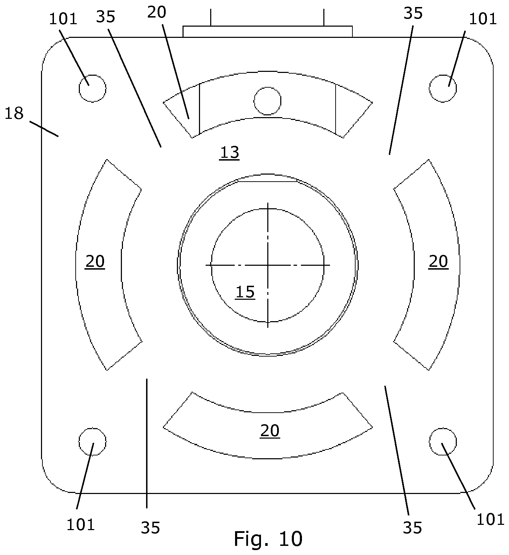

Fig. 10 illustrates a front view of the process unit. In this view, it is illustrated that the proximal outer flange 18 extends about the proximal inner flange 13.

The inner wall and the outer wall are joined by rigid connectors extending between an inner surface of the outer wall and an outer surface of the inner wall and preventing movement of the inner wall relative to the outer wall. The rigid connectors are illustrated by reference number 35 between the openings forming the outer passage 20, c.f. also Fig. 3. The connectors occupy a blocked space in the outer passage and thus increase the pressure drop over the process unit. It may be desired to leave as much free space for transport of the ventilation air as possible and yet have a strong and optionally rigid connection between the inner and outer walls.

It may be desired to have as much free space in the outer passage as possible to envelope the inner passage to render it improbable that a material failure leads to the creation of a flow path directly from the inner passage to the ambient space without connecting to the outer passage where the leak can be detected and the material optionally can be ventilated away from the process unit.

The openings 101 are provided for connection of a double pipe system or to another control unit of an equivalent design for feeding the hazardous material and ventilation air to the inner and outer passages. The distal outer and inner flanges are essentially identical to the proximal inner and outer flanges, and they are therefore not illustrated in a separate illustration.

In Fig. 10 the rigid connectors are casted in one piece with the inner and outer walls. Alternatively, they are made in distinct pieces, and joined to the inner and outer walls e.g. adhesively, by welding or by other processes.

Fig. 11 illustrates the same cross-section as Fig. 10 but with the illustration of a closed-line geometry 111 which is defined as a line extending in the outer passage circumferentially about the inner wall. The process unit according to the invention may, in one embodiment be made such that at least one closed-line geometry can be defined for any cross-section between a proximal and distal flange perpendicular to the flow direction in the inner passage. Particularly, the closed-line geometry 111 may be of an arbitrary shape but must be between the inner wall and outer wall and must be defined such that any line drawn from the centre axis and radially outwards intersects the closed line geometry line only once, and a closed-line geometry defined in that way may extend partly through air and partly through solid matter. The solid matter is formed by the aforementioned rigid connectors. The geometry should follow the rule that the part of the closed line-geometry which extends in air,

$\sum_{j=0}^{m} L_{Bj}$, constitutes at least 25 percent of the length of that part of the closed line-geometry which extends through solid matter constituted by the rigid connectors 24, $\sum_{i=0}^{n} L_{Ai}$, This ratio can be summed up as follows:

$$\sum_{j=0}^{m} L_{Bj} \geq 0.25 * \sum_{i=0}^{n} L_{Ai}$$

Fig. 11 illustrates a particular embodiment where the closed-line geometry is circular.

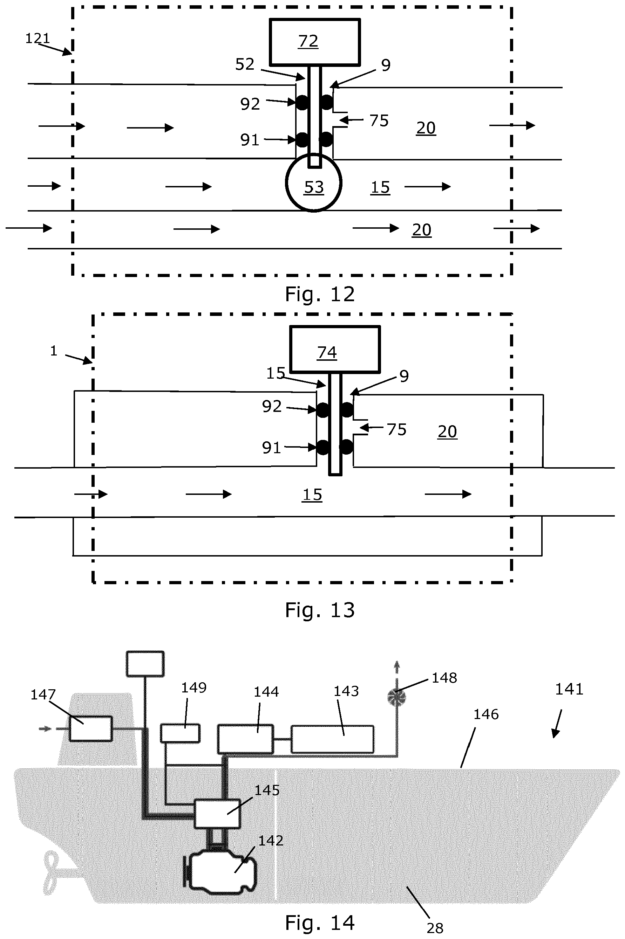

Fig. 12 illustrates schematically the process unit inserted in a gas combustion system and forming a valve with a valve element 53 controlling the flow of combustion gas for a main engine.

Fig. 13 illustrates schematically the process unit inserted in a gas combustion system and forming a sensor unit 74 for sensing pressure of combustion gas for a main engine.

In the embodiments shown in Figs. 12 and 13, the pressure equalisation structures 75 form only one single conduit not enabling ventilation of the chamber part of the control passage (between the inner and outer sealing structures 91,92) but in case of a leakage, a flow will be directed through the leak and create a flow through the conduit 75. In the embodiment of Fig. 12, the outer passage 20 is presented as a ventilated volume with open ends and flow arrows. In the embodiment of Fig. 13, the outer passage 20 and the chamber between the inner and outer sealing structures 91, 92, are e.g. containing a non-flowing inert gas at a static pressure, represented by the lack of flow arrows and by the fact that it is a closed volume, i.e. closed outside the control structure.

Fig. 14 illustrates a vessel 141 with a process unit according to the invention.

In the embodiment of Fig. 14, the process unit controls supply of fuel gas to a combustion system, in this case the main engine 142 of a marine vessel . In this embodiment, the fuel gas is supplied from a tank 143 arranged above deck 146 through the Fuel Gas Supply System (FGSS) 144. The process unit 145 in one embodiment, or a combination of embodiments is arranged, along with the combustion system 142 (the main engine), below deck 146. This location increases the need for leak detection and optionally for ventilation. The flow of a ventilation gas may be provided in the outer passage 20 from a ventilation inlet 147 to a suction device 148. Both the ventilation inlet 147 and the suction device 148 are in communication with an ambient space above deck 146.

Inert gas from the tank 149 can be used for purging the fuel gas out of the system. The inert gas is distributed both to the FGSS 144 and to the unit 145 according to the invention.

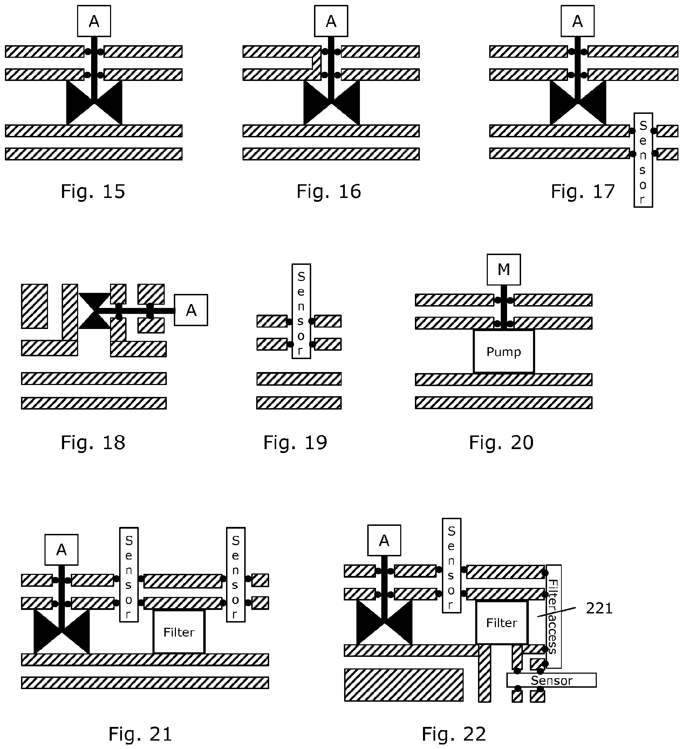

Figs. 15-25 illustrate different implementations of the process unit. In Figs. 15-18, 21, and 22, the process unit forms a valve, e.g. a butterfly valve. In Fig. 16, the outer passage is open only from one side, whereas the other figures show valves where the outer passage can ventilate the chamber about the coupling. In Fig. 17, the valve is combined with a sensor, in Fig. 19 the process unit forms a sensor unit, in Figs. 21 and 22, the valve is further combined with a filter and sensor elements.

Fig. 18 illustrates an embodiment where the outer passage and inner passage forms a branch section.

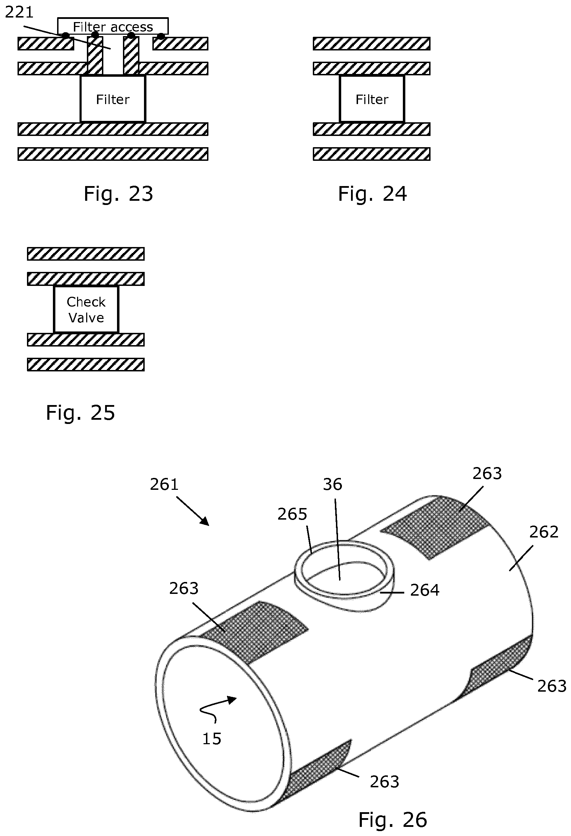

Fig. 20 illustrates the process unit in the form of a pump, Figs. 23 and 24 in the form of filters, and Fig 25 in the form of a check valve. The units in Figs. 22 and 23 comprise a control passage 221 for enabling inspection and replacement of filters.

Fig. 26 illustrates a perspective view of the inner wall 261. The outer surface 262 of the inner wall forms an inner surface in the outer passage. The marked surface portions 263 on the outer surface 262 illustrate a boundary between the inner wall and the connectors, i. e. where the connectors join the inner wall irrespective whether they are formed as separate parts attached to the inner wall or formed in one part with the inner wall. In this view, it is clearly shown that less that 50 percent of the outer surface of the inner wall is occupied by the connectors and the remaining more than 50 percent of the outer surface is exposed in the outer passage. It is also illustrated that the a short tube 264 extends upwardly from the inner opening 36 and terminates in an upper flange 265. The short tube 264 stiffens the inner opening and facilitate access of the control structure into the inner passage 15.

**Claims**

1. A process unit (11) for hazardous material, the process unit comprising:

    - at least one proximal inner flange (13), at least one distal inner flange (14), and an inner wall (12) extending between the at least one proximal inner flange (13) and the at least one distal inner flange (14) and defining an inner passage (15) for transport of the hazardous material,
    - a process control structure (16) configured for interaction with the hazardous material in the inner passage, and
    - at least one proximal outer flange (18), at least one distal outer flange (19), and an outer wall (17) extending about the inner wall between the at least one proximal outer flange (18) and the at least one distal outer flange (19) and defining, between the inner wall and the outer wall, an outer passage (20) extending along a centre axis between a proximal outer opening and a distal outer opening, the proximal outer opening being within the proximal outer flange, the distal inner opening being within the distal outer flange,

wherein the inner wall (12) forms an inner opening (36) through the inner wall and the outer wall (17) forms an outer opening (37) through the outer wall, wherein at least one of the inner opening (36) and outer opening (37) is arranged in sealing engagement with the process control structure, and wherein the outer passage forms a single unified space about the inner passage.

2. A process unit according to claim 1, wherein the inner wall (12) forms an inner surface (31) and an opposite outer surface (32), the inner surface forming a surface in the inner passage and the outer surface forming a surface in the outer passage, wherein the outer wall (17) forms an inner surface (33) forming a surface in the outer passage and an opposite outer surface (34) facing away from the inner and outer passages, wherein the outer surface of the inner wall faces the inner surface of the outer wall, and wherein the inner wall (12) and the outer wall (17) are joined by rigid connectors (35) extending between the inner surface of the outer wall and the outer surface of the inner wall, the rigid connectors preventing movement of the inner wall relative to the outer wall and occupying a blocked space in the outer passage (20) and leaving a remaining free space for transport of ventilation air.

3. A process unit according to claims 2, wherein the at least 50 percent of the outer surface of the inner wall is exposed in the outer passage.

4. A process unit according to any of the preceding claims, wherein the inner opening (36) and the outer opening (37) are concentrically aligned about an axis perpendicular to the centre axis.

5. A process unit according to any of the preceding claims, wherein the at least one of the inner opening (36) and outer opening (37) arranged in sealing engagement with the process control structure, comprises a resilient gasket incorporated in the corresponding wall.

6. A process unit according to claim 5, wherein the resilient gasket incorporated in the corresponding wall is arranged in a recess in an edge around the inner and/or outer opening.

7. A process unit according to any of the preceding claims, comprising a control passage (71, 73) extending between the inner opening and the outer opening and at least partly housing the process control structure.

8. A process unit according to any of the preceding claims, wherein the outer passage has a non-circular cross-section.

9. A process unit according to any of the preceding claims, wherein the proximal inner flange and the proximal outer flange are formed in one piece forming a proximal connector face, and wherein the distal inner flange and the distal outer flange are formed in one piece forming a distal connector face.

10. A process unit according to claim 9, wherein the outer passage extends between a plurality of outer passage openings in the proximal connector face and a plurality of outer passage openings in the distal connector face.

11. A process unit according to claim 9 or 10, wherein at least one of the distal connector face and the proximal connector face is formed in one piece with the inner wall and outer wall.

12. A process unit according to claim 2-11, wherein the inner wall (12), outer wall (17), and the rigid connectors (35) are made in one piece.

13. A process unit according to claim 12, wherein the inner wall (12), the outer wall (17), the rigid connectors (35), the distal inner flange (14), the distal outer flange (19), the proximal inner flange (13), and the proximal outer flange (18) are made in one piece.

14. A method of transporting hazardous material by use of a process unit according to any of claims 1-13, the method comprising:

providing a flow of the hazardous material at a material pressure in the inner passage (15), providing ventilation air at a ventilation pressure in the outer passage (20), wherein the ventilation pressure is lower than an ambient pressure outside the outer wall, or wherein the ventilation pressure is higher than an ambient pressure outside the outer wall, and wherein the ventilation air is provided without a flow in the outer passage, and ventilation pressure is a static pressure.

15. A method of transporting hazardous material by use of a process unit according to any of claims 1-13, the method comprising:

providing a flow of the hazardous material at a material pressure in the inner passage (15),

providing ventilation air at a ventilation pressure in the outer passage (20),

wherein the ventilation pressure is lower than an ambient pressure outside the outer wall, or wherein the ventilation pressure is higher than an ambient pressure outside the outer wall, and wherein the ventilation air is provided with a flow in the outer passage, and the ventilation pressure is a dynamic pressure.

**Patentansprüche**

1. Verarbeitungseinheit (11) für Gefahrstoffe, wobei die Verarbeitungseinheit umfasst:

- mindestens einen proximalen inneren Flansch (13), mindestens einen distalen inneren Flansch (14) und eine innere Wand (12), die sich zwischen dem mindestens einen proximalen inneren Flansch (13) und dem mindestens einen distalen inneren Flansch (14) erstreckt und einen inneren Durchgang (15) zum Transport der Gefahrstoffe definiert,
- eine Verarbeitungssteuerungsstruktur (16), die zur Wechselwirkung mit den Gefahrstoffen in dem inneren Durchgang eingerichtet ist, und
- mindestens einen proximalen äußeren Flansch (18), mindestens einen distalen äußeren Flansch (19) und eine äußere Wand (17), die sich um die innere Wand zwischen dem mindestens einen proximalen äußeren Flansch (18) und dem mindestens einen distalen äußeren Flansch (19) erstreckt und, zwischen der inneren Wand und der äußeren Wand, einen äußeren Durchgang (20) definiert, der sich entlang einer Mittelachse zwischen einer proximalen äußeren Öffnung und einer distalen äußeren Öffnung erstreckt, wobei sich die proximale äußere Öffnung innerhalb des proximalen äußeren Flansches befindet, wobei sich die distale innere Öffnung innerhalb des distalen äußeren Flansches befindet,

wobei die innere Wand (12) eine innere Öffnung (36) durch die innere Wand bildet und die äußere Wand (17) eine äußere Öffnung (37) durch die äußere Wand bildet, wobei die innere Öffnung (36) und/oder die äußere Öffnung (37) in Dichtungseingriff mit der Verarbeitungssteuerungsstruktur (16) angeordnet sind/ist, und wobei der äußere Durchgang einen einzigen einheitlichen Raum um den inneren Durchgang bildet.

2. Verarbeitungseinheit nach Anspruch 1, wobei die innere Wand (12) eine innere Fläche (31) und eine entgegengesetzte äußere Fläche (32) bildet, wobei die innere Fläche eine Fläche in dem inneren Durchgang bildet und die äußere Fläche eine Fläche in dem äußeren Durchgang bildet, wobei die äußere Wand (17) eine innere Fläche (33), die eine Fläche in dem äußeren Durchgang bildet, und eine entgegengesetzte äußere Fläche (34), die von dem inneren und dem äußeren Durchgang abgewandt ist, bildet, wobei die äußere Fläche der inneren Wand der inneren Fläche der äußeren Wand zugewandt ist und wobei die innere Wand (12) und die äußere Wand (17) durch starre Verbinder (35) verbunden sind, die sich zwischen der inneren Fläche der äußeren Wand und der äußeren Fläche der inneren Wand erstrecken, wobei die starren Verbinder eine Bewegung der inneren Wand relativ zu der äußeren Wand verhindern und einen gesperrten Raum in dem äußeren Durchgang (20) belegen sowie einen übrigen freien Raum zum Transport von Belüftungsluft lassen.

3. Verarbeitungseinheit nach einem der Ansprüche 2, wobei mindestens 50 Prozent der äußeren Fläche der inneren Wand in dem äußeren Durchgang freiliegen.

4. Verarbeitungseinheit nach einem der vorhergehenden Ansprüche, wobei die innere Öffnung (36) und die äußere Öffnung (37) um eine Achse senkrecht zu der Mittelachse konzentrisch ausgerichtet sind.

5. Verarbeitungseinheit nach einem der vorhergehenden Ansprüche, wobei die innere Öffnung (36) und/oder die äußere Öffnung (37), die in Dichtungseingriff mit der Verarbeitungssteuerungsstruktur angeordnet sind/ist, einen elastischen Dichtungsring umfassen/umfasst, der in der entsprechenden Wand integriert ist.

6. Verarbeitungseinheit nach Anspruch 5, wobei der elastische Dichtungsring, der in der entsprechenden Wand integriert ist, in einer Vertiefung in einem Rand um die innere und/oder äußere Öffnung angeordnet ist.

7. Verarbeitungseinheit nach einem der vorhergehenden Ansprüche, umfassend einen Steuerungsdurchgang (71, 73), der sich zwischen der inneren Öffnung und der äußeren Öffnung erstreckt und zumindest teilweise die Verarbeitungssteuerungsstruktur unterbringt.

8. Verarbeitungseinheit nach einem der vorhergehenden Ansprüche, wobei der äußere Durchgang einen nicht kreisförmigen Querschnitt aufweist.

9. Verarbeitungseinheit nach einem der vorhergehenden Ansprüche, wobei der proximale innere Flansch und der proximale äußere Flansch in einem Stück gebildet sind, das eine proximale Verbinderfläche bildet, und wobei der distale innere Flansch und der distale äußere Flansch in einem Stück gebildet sind, das eine distale Verbinderfläche bildet.

10. Verarbeitungseinheit nach Anspruch 9, wobei sich der äußere Durchgang zwischen mehreren äußeren Durchgangsöffnungen in der proximalen Verbinderfläche und mehreren äußeren Durchgangsöffnungen in der distalen Verbinderfläche erstreckt.

11. Verarbeitungseinheit nach Anspruch 9 oder 10, wobei die distale Verbinderfläche und/oder die proximale Verbinderfläche in einem Stück mit der inneren Wand und der äußeren Wand gebildet sind/ist.

12. Verarbeitungseinheit nach Anspruch 2-11, wobei die innere Wand (12), die äußere Wand (17) und die starren Verbinder (35) in einem Stück hergestellt sind.

13. Verarbeitungseinheit nach Anspruch 12, wobei die innere Wand (12), die äußere Wand (17), die starren Verbinder (35), der distale innere Flansch (14), der distale äußere Flansch (19), der proximale innere Flansch (13) und der proximale äußere Flansch (18) in einem Stück hergestellt sind.

14. Verfahren zum Transportieren von Gefahrstoffen unter Verwendung einer Verarbeitungseinheit nach einem der Ansprüche 1-13, wobei das Verfahren umfasst:

Vorsehen einer Strömung der Gefahrstoffe mit einem Stoffdruck in dem inneren Durchgang (15),
Vorsehen von Belüftungsluft mit einem Belüftungsdruck in dem äußeren Durchgang (20), wobei der Belüftungsdruck geringer ist als ein Umgebungsdruck außerhalb der äußeren Wand oder wobei der Belüftungsdruck höher ist als ein Umgebungsdruck außerhalb der äußeren Wand, und wobei die Belüftungsluft ohne eine Strömung in dem äußeren Durchgang vorgesehen wird und ein Belüftungsdruck ein statischer Druck ist.

15. Verfahren zum Transportieren von Gefahrstoffen unter Verwendung einer Verarbeitungseinheit nach einem der Ansprüche 1-13, wobei das Verfahren umfasst:

Vorsehen einer Strömung der Gefahrstoffe mit einem Stoffdruck in dem inneren Durchgang (15),
Vorsehen von Belüftungsluft mit einem Belüftungsdruck in dem äußeren Durchgang (20), wobei der Belüftungsdruck geringer ist als ein Umgebungsdruck außerhalb der äußeren Wand oder wobei der Belüftungsdruck höher ist als ein Umgebungsdruck außerhalb der äußeren Wand, und wobei die Belüftungsluft mit einer Strömung in dem äußeren Durchgang vorgesehen wird und der Belüftungsdruck ein dynamischer Druck ist.

**Revendications**

1. Unité de traitement (11) pour matières dangereuses, l'unité de traitement comprenant :

- au moins un rebord intérieur proximal (13), au moins un rebord intérieur distal (14) et une paroi intérieure (12) s'étendant entre l'au moins un rebord intérieur proximal (13) et l'au moins un rebord intérieur distal (14) et définissant un passage intérieur (15) pour le transport des matières dangereuses,
- une structure de commande de traitement (16) configurée pour interagir avec les matières dangereuses dans le passage intérieur, et
- au moins un rebord extérieur proximal (18), au moins un rebord extérieur distal (19), et une paroi extérieure (17) s'étendant autour de la paroi intérieure entre l'au moins un rebord extérieur proximal (18) et l'au moins un rebord extérieur distal (19) et définissant, entre la paroi intérieure et la paroi extérieure, un passage extérieur (20) s'étendant le long d'un axe central entre une ouverture extérieure proximale et une ouverture extérieure distale, l'ouverture extérieure proximale se trouvant dans le rebord extérieur proximal, l'ouverture intérieure distale se trouvant dans le rebord extérieur distal,

dans laquelle la paroi intérieure (12) forme une ouverture intérieure (36) à travers la paroi intérieure et la paroi extérieure (17) forme une ouverture extérieure (37) à travers la paroi extérieure,
dans laquelle l'une au moins parmi l'ouverture intérieure (36) et l'ouverture extérieure (37) est disposée en engagement étanche avec la structure de commande de traitement (16), et
dans laquelle le passage extérieur forme un seul espace unifié autour du passage intérieur.

2. Unité de traitement selon la revendication 1, dans laquelle la paroi intérieure (12) forme une surface intérieure (31) et une surface extérieure (32) opposée, la surface intérieure formant une surface dans le passage intérieur et la surface extérieure formant une surface dans le passage extérieur, dans laquelle la paroi extérieure (17) forme une surface intérieure (33) formant une surface dans le passage extérieur et une surface extérieure (34) opposée détournée des passages intérieur et extérieur, dans laquelle la surface extérieure de la paroi intérieure est tournée vers la surface intérieure de la paroi extérieure, et dans laquelle la paroi intérieure (12) et la paroi extérieure (17) sont reliées par des connecteurs rigides (35) s'étendant entre la surface intérieure de la paroi extérieure et la surface extérieure de la paroi intérieure, les connecteurs rigides empêchant le déplacement de la paroi intérieure par rapport à la paroi extérieure et occupant un espace bloqué dans le passage extérieur (20) et laissant un espace libre restant pour le transport d'air de ventilation.

3. Unité de traitement selon la revendication 2, dans laquelle au moins 50 pour cent de la surface extérieure de la paroi intérieure sont exposés dans le passage extérieur.

4. Unité de traitement selon l'une quelconque des revendications précédentes, dans laquelle l'ouverture intérieure (36) et l'ouverture extérieure (37) sont alignées de façon concentrique autour d'un axe perpendiculaire à l'axe central.

5. Unité de traitement selon l'une quelconque des revendications précédentes, dans laquelle l'au moins une parmi l'ouverture intérieure (36) et l'ouverture extérieure (37) disposée en engagement étanche avec la structure de commande de traitement comprend un joint d'étanchéité élastique incorporé dans la paroi correspondante.

6. Unité de traitement selon la revendication 5, dans laquelle le joint d'étanchéité élastique incorporé dans la paroi correspondante est disposé dans un renfoncement dans un bord autour de l'ouverture intérieure et/ou extérieure.

7. Unité de traitement selon l'une quelconque des revendications précédentes, comprenant un passage de commande (71, 73) s'étendant entre l'ouverture intérieure et l'ouverture extérieure et accueillant au moins partiellement la structure de commande de traitement.

8. Unité de traitement selon l'une quelconque des revendications précédentes, dans laquelle le passage extérieur présente une section transversale non circulaire.

9. Unité de traitement selon l'une quelconque des revendications précédentes, dans laquelle le rebord intérieur proximal et le rebord extérieur proximal sont formés d'une seule pièce formant une face de connecteur proximale, et dans laquelle le rebord intérieur distal et le rebord extérieur distal sont formés d'une seule pièce formant une face de connecteur distale.

10. Unité de traitement selon la revendication 9, dans laquelle le passage extérieur s'étend entre une pluralité d'ouvertures de passage extérieur dans la face de connecteur proximale et une pluralité d'ouvertures de passage extérieur dans la face de connecteur distale.

11. Unité de traitement selon la revendication 9 ou 10, dans laquelle l'une au moins parmi la face de connecteur distale et la face de connecteur proximale est formée d'une seule pièce avec la paroi intérieure et la paroi extérieure.

12. Unité de traitement selon l'une des revendications 2 à 11, dans laquelle la paroi intérieure (12), la paroi extérieure (17) et les connecteurs rigides (35) sont constitués d'une seule pièce.

13. Unité de traitement selon la revendication 12, dans laquelle la paroi intérieure (12), la paroi extérieure (17), les connecteurs rigides (35), le rebord intérieur distal (14), le rebord extérieur distal (19), le rebord intérieur proximal (13) et le rebord extérieur proximal (18) sont constitués d'une seule pièce.

14. Procédé de transport de matières dangereuses utilisant une unité de traitement selon l'une quelconque des revendications 1 à 13, le procédé comprenant :

la mise à disposition d'un flux de matière dangereuse à une pression de matière dans le passage intérieur (15),
la mise à disposition d'air de ventilation à une pression de ventilation dans le passage extérieur (20),
dans lequel la pression de ventilation est inférieure à une pression ambiante à l'extérieur de la paroi extérieure, ou dans laquelle la pression de ventilation est supérieure à une pression ambiante à l'extérieur de la paroi extérieure, et dans laquelle l'air de ventilation est fourni sans flux dans le passage extérieur, et la pression de ventilation est une pression statique.

15. Procédé de transport de matières dangereuses utilisant une unité de traitement selon l'une quelconque des revendications 1 à 13, le procédé comprenant :

la mise à disposition d'un flux de matière dangereuse à une pression de matière dans le passage intérieur (15),
la mise à disposition d'air de ventilation à une pression de ventilation dans le passage extérieur (20),
dans laquelle la pression de ventilation est inférieure à une pression ambiante à l'extérieur de la paroi extérieure, ou dans laquelle la pression de ventilation est supérieure à une pression ambiante à l'extérieur de la paroi extérieure, et dans laquelle l'air de ventilation est fourni avec un flux dans le passage extérieur, et la pression de ventilation est une pression dynamique.

Fig. 1

Fig. 2

Fig. 3

Fig. 4

Fig. 5

Fig. 6

Fig. 7

Fig. 8

Fig. 9

Fig. 10

EP 3 571 386 B1

Fig. 11

21

121

72

52

9

92

91

75

20

53

15

20

Fig. 12

1

74

15

9

92

91

75

20

15

Fig. 13

147

149

144

143

148

141

146

145

142

28

Fig. 14

Fig. 15

Fig. 16

Fig. 17

Fig. 18

Fig. 19

Fig. 20

Fig. 21

Fig. 22

221

Filter access

Filter

**Fig. 23**

Filter

**Fig. 24**

Check Valve

**Fig. 25**

261

36

265

263

264

262

263

263

15

263

**Fig. 26**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015316190 A
- WO 2017162333 A
- EP 2589788 A